# EUROPEAN PATENT APPLICATION

(11) **EP 4 160 559 A1**
(43) Date of publication of application: **05.04.2023**
(21) Application number: 22183323.9
(22) Date of filing: 06.07.2022
(51) Int. Cl.: G07G 1/00, G06Q 20/18, G06Q 20/20, G07G 3/00

(54) **INFORMATION PROCESSING PROGRAM, INFORMATION PROCESSING METHOD, AND INFORMATION PROCESSING APPARATUS**

(30) Priority: 30.09.2021 JP 2021161970
(71) Applicant: FUJITSU LIMITED, Kawasaki-shi, Kanagawa 211-8588 (JP)
(72) Inventor: Ishida, Ryo, Kawasaki-shi, Kanagawa, 211-8588 (JP); Ushijima, Satoru, Kawasaki-shi, Kanagawa, 211-8588 (JP); Aoki, Yasuhiro, Kawasaki-shi, Kanagawa, 211-8588 (JP)
(74) Representative: Hoffmann Eitle

(57) **Abstract**

An information processing apparatus (100) obtains image data in which a predetermined area in front of an accounting machine, which is used by a user to register an article and pay the bill, is captured. The information processing apparatus (100) inputs the image data in a machine learning model (104) that is trained to identify an article and a storage for the article, and obtains the output result. The information processing apparatus (100) refers to the article and the storage specified in the output result, and identifies the action taken by the user with respect to the article.

## Description

### FIELD

The embodiments discussed herein are related to an information processing program, an information processing method, and an information processing apparatus.

### BACKGROUND

In the stores such as supermarkets or convenience stores, the self-service checkout system has become popular. The self-service checkout system is a POS checkout system (POS stands for Point Of Sale) using which a user, who is purchasing articles, performs the operations of reading the barcodes of the articles and settling the bill. For example, as a result of introducing the self-service checkout system, it becomes possible to improve on the shortage of manpower attributed to the decline in population, or to hold down the manpower expenses.
[Patent Literature 1] Japanese Patent Application Laid-open No. 2020-53019

With the techniques recited in the background section, in the technology mentioned above, it is difficult to detect the occurrence of unfair action. For example, in the self-service checkout system, there are times when the user either makes some inadvertent mistake or cheats intentionally, which results in non-payment.

As far as an inadvertent mistake is concerned, omission of scanning can occur when an article is moved from the basket into a shopping bag while forgetting to scan the article. For example, in a beer case including six cans of beer, a barcode is attached to the beer case as well as to each beer can. In that case, a reading mistake can occur when the barcode of a beer can is mistakenly presented instead of presenting the barcode of the beer case. As far as intentional cheating is concerned, there is barcode hiding in which the user pretends to scan an article while hiding the barcode by fingers.

In that regard, it is possible to think of installing a weight sensor in the self-service checkout machine, so as to enable automatic counting of the number of articles and detect an unfair action. However, the implementation cost is too high, and it is not a practical solution particularly for large stores or for the stores spread throughout the country.

Accordingly, it is an object in one aspect of an embodiment of the invention to provide an information processing program, an information processing method, and an information processing apparatus that can detect an unfair action taken at a self-service checkout machine.

### SUMMARY

According to an aspect of an embodiment, an information processing program that causes a computer (100) to execute a process includes obtaining (112) image data in which a predetermined area in front of an accounting machine, which is used by a user to register an article and pay bill, is captured, obtaining (113) output result by inputting the image data in a machine learning model (104) that is trained to identify an article and a storage for an article, and identifying (113), by referring to the article and the storage specified in the output result, action taken by the user with respect to an article.

### BRIEF DESCRIPTION OF DRAWINGS

FIG. 1 is a diagram illustrating an exemplary overall configuration of a self-service checkout system according to a first embodiment;
FIG. 2 is a functional block diagram illustrating a functional configuration of an information processing apparatus according to the first embodiment;
FIG. 3 is a diagram for explaining training data;
FIG. 4 is a diagram for explaining the machine learning in a machine learning model;
FIG. 5 is a diagram for explaining action identification based on human object interaction detection (HOID) ;
FIG. 6 is a diagram for explaining an example of counting up the purchased articles;
FIG. 7 is a diagram illustrating unfair action detection;
FIG. 8 is a flowchart for explaining the flow of a self-service checkout operation according to the first embodiment;
FIG. 9 is a flowchart for explaining the flow of an operation for counting the number of articles;
FIG. 10 is a diagram for explaining the action identification performed based on a machine learning model;
FIG. 11 is a diagram for explaining the action identification performed by combining the HOID and a machine learning model;
FIG. 12 is a diagram for explaining an exemplary hardware configuration; and
FIG. 13 is a diagram for explaining an exemplary hardware configuration of a self-service checkout machine.

### DESCRIPTION OF EMBODIMENTS

Preferred embodiments will be explained with reference to accompanying drawings. However, the present invention is not limited by the embodiments described below. Meanwhile, the embodiments can be combined without causing any contradictions.

### [a] First Embodiment

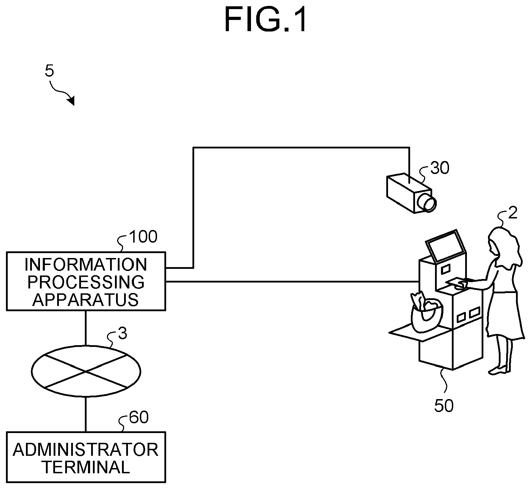

FIG. 1 is a diagram illustrating an exemplary overall configuration of a self-service checkout system 5 according to a first embodiment. As illustrated in FIG. 1, the self-service checkout system 5 includes a camera 30, a self-service checkout machine 50, an administrator terminal 60, and an information processing apparatus 100.

The information processing apparatus 100 represents an example of a computer connected to the camera 30 and the self-service checkout machine 50. Moreover, the information processing apparatus 100 is connected to the administrator terminal 60 via a network 3 that is configurable with various communication networks of the wired type as well as the wireless type. The camera 30 and the self-service checkout machine 50 can also be connected to the information processing apparatus 100 via the network 3.

The camera 30 represents an example of a camera that takes a video of the area in which the self-service checkout machine 50 is installed. The camera 30 sends the data of a video to the information processing apparatus 100. In the following explanation, the data of a video is sometimes referred to as "video data".

The video data contains a plurality of image frames in chronological order. Each image frame is assigned with a frame number in ascending chronological order. A single image frame represents image data of a still image that is taken at a particular timing by the camera 30.

The self-service checkout machine 50 represents an example of a POS checkout system or an accounting machine using which a user 2, who is purchasing articles, performs the operations of reading the barcodes of the articles and settling the bill. For example, when the user 2 moves a target article for purchase within the scanning area of the self-service checkout machine 50, the self-service checkout machine 50 scans the barcode of that article and registers it as a target article for purchase.

The user 2 repeatedly performs the operation of article registration and, once the scanning of the articles is completed, operates the touch-sensitive panel of the self-service checkout machine 50 and requests for bill settlement. Upon receiving the request for bill settlement, the self-service checkout machine 50 presents the number of target articles for purchase and the purchase price, and performs a bill settlement operation. The self-service checkout machine 50 stores, in a memory unit, the information about the articles that were scanned since the start of the scanning performed by the user 2 till the request for bill settlement issued by the user 2; and sends the stored information as self-service checkout data (article information) to the information processing apparatus 100.

The administrator terminal 60 represents an example of a terminal device used by the administrator of the store. The administrator terminal 60 receives, from the information processing apparatus 100, a notification of an alert indicating that there was an unfair action in regard to the purchase of articles.

In this configuration, the information processing apparatus 100 obtains the image data of a predetermined area in front of the self-service checkout machine 50 using which the user 2 registers articles and pays the bill. Then, the information processing apparatus 100 inputs the image data in a machine learning model that is trained to identify the articles and the storage for the articles (such as a shopping bag), and obtains the output result. Subsequently, the information processing apparatus 100 refers to the articles and the storage specified in the output result, and identifies the action of the user with respect to the articles.

That is, the information processing apparatus 100 detects an article and the interaction of the user 2 with respect to the article (for example, the action of holding); and counts the number of articles taken out from the shopping basket, counts the number of the articles that passed through the scanning position in the self-service checkout machine 50, and count the number of articles put in the shopping bag. Then, the information processing apparatus 100 compares the number of counted articles with the number of articles scanned by the self-service checkout machine 50; and performs unfair action detection in regard to the purchase of the articles.

In this way, since no weight sensor is installed in the information processing apparatus 100, not only the implementation cost can be held down, but any unfair action at the self-service checkout machine 50 can also be detected.

### Functional configuration

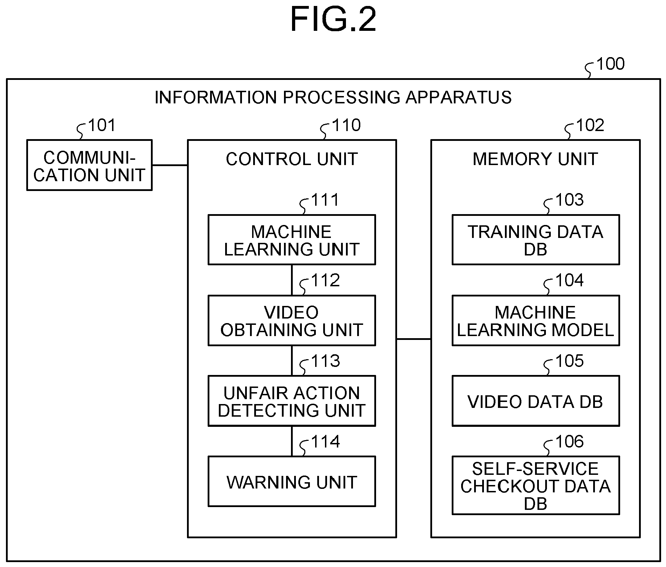

FIG. 2 is a functional block diagram illustrating a functional configuration of the information processing apparatus 100 according to the first embodiment. As illustrated in FIG. 2, the information processing apparatus 100 includes a communication unit 101, a memory unit 102, and a control unit 110.

The communication unit 101 is a processing unit that controls the communication with other devices and is implemented using, for example, a communication interface. For example, the communication unit 101 receives video data from the camera 30; as well as sends the processing result obtained by the control unit 110 to the administrator terminal 60.

The memory unit 102 is a processing unit that is used to store a variety of data and to store the computer programs to be executed by the control unit 110; and is implemented using, for example, a memory or a hard disk. The memory unit 102 is used to store a training data DB 103, a machine learning model 104, a video data DB 105, and a self-service checkout data DB 106.

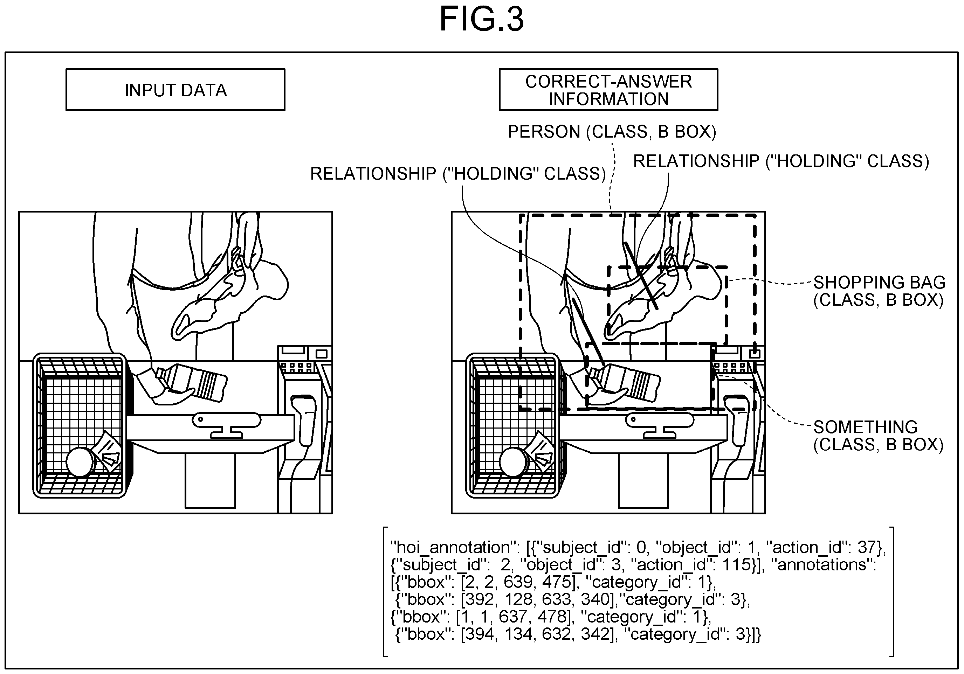

The training data DB 103 is a database for storing the data that is used in the training of the machine learning model 104. For example, explained below with reference to FIG. 3 is an example in which the human object interaction detection (HOID) is implemented in the machine learning model 104. FIG. 3 is a diagram for explaining the training data. As illustrated in FIG. 3, each set of training data contains image data serving as the input data, and contains correct-answer information that is set with respect to the image data.

In the correct-answer information, the following information is set: a class for a person and an object that are the detection targets; a class indicating the interaction between a person and an object; and Bbox indicating the area of each class (Bbox stands for Bounding box, and represents the area information of an object). For example, the following information is set as the correct-answer information: area information of a "something" class indicating an object such as an article excluding a shopping bag; area information of a "person" class indicating the user who purchases an article; and the relationship (a "holding" class) indicating the interaction between the "something" class and the "person" class. That is, as the correct-answer information, the information related to an object held by a person is set. Meanwhile, the "person" class represents an example of a first-type class; the "something" class represents an example of a second-type class; the area information of the "person" class represents an example of first-type area information; the area information of the "something" class represents an example of second-type area information; and the interaction between a person and an object represents an example of interaction.

Moreover, the following information is also set as the correct-answer information: area information of a "shopping bag" class indicating a shopping bag; area information of a "person" class indicating the user of the shopping bag; and the relationship (a "holding" class) indicating the interaction between the "shopping bag" class and the "person" class. That is, as the correct-answer information, the information related to the shopping bag held by a person is set.

Generally, if the "something" class is created according to the normal object identification (object recognition); it results in the detection of all objects not related to the task, such as the background, clothing, and small articles. Moreover, since all those objects imply "something", nothing becomes clear except the fact that a large number of Bbox get identified in the image data. In the case of the HOID, since the peculiar relationship indicating an object being held by a person is understood (sometimes there are other relationships too, such as sitting or operating), that information can be used as meaningful information in a task (for example, an unfair action detection task in the self-service checkout machine). After detecting an object as "something", the shopping bag is identified as a unique class called "bag (shopping bag)". The shopping bag represents information that is valuable in the unfair action detection task in the self-service checkout machine, but is not important in other tasks. Hence, the value of that information lies in being used based on the unique knowledge of the unfair action detection task in the self-service checkout machine indicating that an article is taken out from a basket (a shopping basket) and is put in a bag. Thus, in this case, it becomes possible to achieve a useful effect.

Returning to the explanation with reference to FIG. 2, the machine learning model 104 represents an example of a machine learning model trained to identify an article captured in training data and to identify the storage (shopping bag) for putting the article. More particularly, the machine learning model 104 identifies, from the input image data, a person, an article, and the relationship between the person and the article; and outputs the identification result. For example, the machine learning model 104 can implement the HOID as well as implement a machine learning model in which various neural networks are used. In the case of the HOID, the following information is output: the "person" class and the area information, the "article" (object) class and the area information, and the interaction between the person and the article.

The video data DB 105 is a database for storing the video data that is obtained by imaging by the camera 30 installed in the self-service checkout machine 50. For example, in the video data DB 105, the video data is stored corresponding to each self-service checkout machine 50 or corresponding to each camera 30.

The self-service checkout data DB 106 is a database for storing a variety of data obtained from the self-service checkout machine 50. For example, the self-service checkout data DB 106 is used to store, for each self-service checkout machine 50, the number of articles registered as the target articles for purchase and the billing amount representing the total of the prices of all target articles for purchase.

The control unit 110 is a processing unit that controls the entire information processing apparatus 100 and is implemented using, for example, a processor. The control unit 110 includes a machine learning unit 111, a video obtaining unit 112, an unfair action detecting unit 113, and a warning unit 114. The machine learning unit 111, the video obtaining unit 112, the unfair action detecting unit 113, and the warning unit 114 are implemented using electronic circuits included in the processor or using the processes executed by the processor.

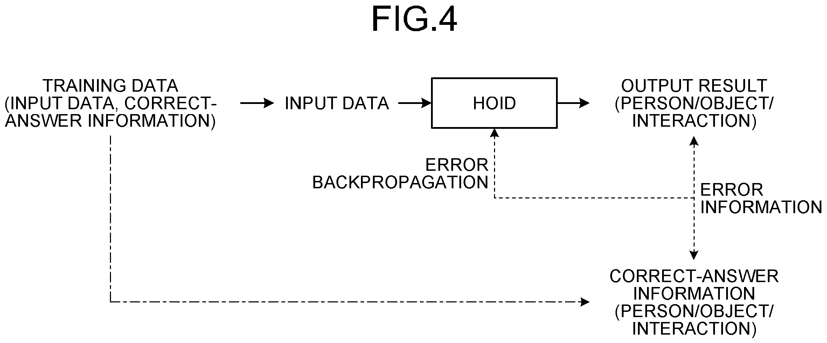

The machine learning unit 111 is a processing unit that uses a variety of training data stored in the training data DB 103, and performs machine learning of the machine learning model 104. FIG. 4 is a diagram for explaining the machine learning in the machine learning model 104. In FIG. 4 is illustrated an example in which the HOID is implemented in the machine learning model 104. As illustrated in FIG. 4, the machine learning unit 111 inputs the input data of the training data in the HOID, and obtains the output result of the HOID. The output result includes the "person" class, the "object" class, and the interaction between the person and the object as detected in the HOID. Then, the machine learning unit 111 calculates error information between the correct-answer information of the training data and the output result of the HOID, and performs machine learning of the HOID according to error backpropagation.

The video obtaining unit 112 is a processing unit that obtains the video data from the camera 30. For example, the video obtaining unit 112 obtains, as needed, the video data from the camera 30 that is installed in the self-service checkout machine 50, and stores the video data in the video data DB 105.

The unfair action detecting unit 113 is a processing unit that, based on the video data obtained as a result of imaging of the surrounding of the self-service checkout machine 50, detects an unfair action such as forgetting to scan an article. More particularly, the unfair action detecting unit 113 obtains image data of a predetermined area in front of the self-service checkout machine 50 using which the user 2 registers articles and pays the bill. Then, the unfair action detecting unit 113 inputs the image data in the machine learning model 104; obtains the output result; refers to the articles and the shopping bags specified in the output result; and identifies the actions of the user 2 with respect to the articles.

For example, the unfair action detecting unit 113 obtains the following from the output result of the HOID: the "person" class and the area information, the "article" (object) class and the area information, and the interaction between the person and the article. Then, the unfair action detecting unit 113 counts the number of articles with respect to which the user 2 (person) took a specific action such as holding (interaction). Subsequently, the unfair action detecting unit 113 compares the counted number of articles with the scanning count indicating the number of articles that are scanned and registered in the self-service checkout machine 50 (i.e., the registered article count). If there is a difference in the two counts, then the unfair action detecting unit 113 detects an unfair action and notifies the warning unit 114.

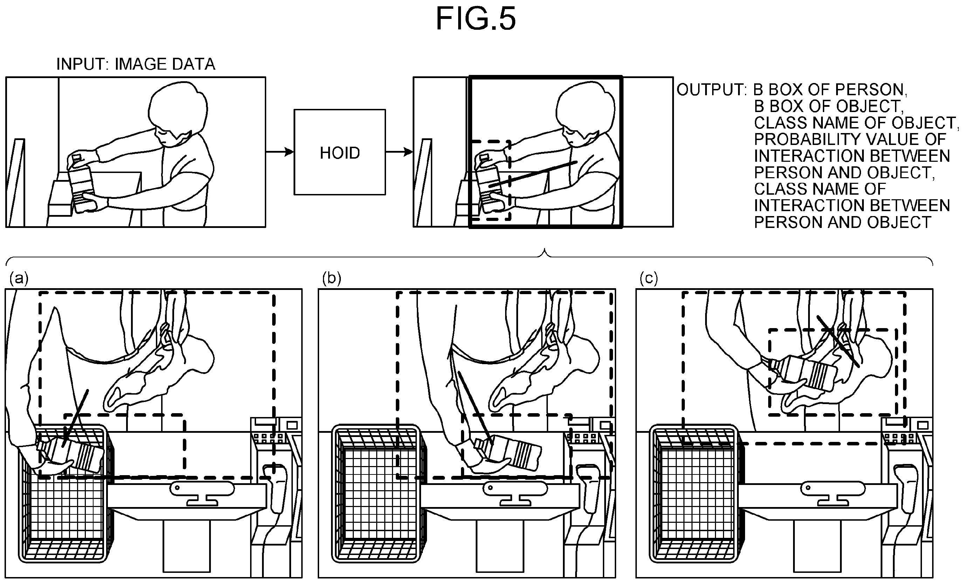

FIG. 5 is a diagram for explaining action identification based on the HOID. As illustrated in FIG. 5, the unfair action detecting unit 113 inputs the sets of image data, which are included in the video data, in the HOID; and obtains the output result of the HOID. As explained above, the output result of the HOID includes the Bbox of a person; the Bbox of an object, the probability value of the interaction between the person and the object; and the class name. Then, based on the output result of the HOID, if any one of the actions (a), (b), and (c) explained below is identified, the unfair action detecting unit 113 counts the number of articles with respect to which the action was taken.

For example, as illustrated in (a) in FIG. 5, from the output result of the HOID, the unfair action detecting unit 113 identifies a person, an article, and the fact that the person is holding the article; and counts the number of articles taken out from the shopping basket. In other words, according to a plurality of sets of image data, after an article in the shopping basket is held by the user 2, if the article is moved to the upper side of the shopping basket, the unfair action detecting unit 113 counts that article in the article takeout count. Meanwhile, the position of the shopping basket represents an example of a second-type area that either can be specified by the administrator or can be automatically specified using a different machine learning model.

As illustrated in (b) in FIG. 5, from the output result of the HOID, the unfair action detecting unit 113 identifies a person, an article, and the fact that the person is holding the article; and counts the number of articles that passed the scanning position of a code, such as the two-dimensional code or the barcode, in the self-service checkout machine 50. In other words, according to a plurality of sets of image data, after an article in the shopping basket is held by the user 2, if the held article passes the scanning position, the unfair action detecting unit 113 counts that article in the scanning target count. Meanwhile, the scanning position represents an example of a first-type area that either can be specified by the administrator or can be automatically specified using a different machine learning model.

As illustrated in (c) in FIG. 5, from the output result of the HOID, the unfair action detecting unit 113 not only identifies a person, an article, and the fact that the person is holding the article, but also identifies a person, a shopping bag, and the fact that the person is holding the shopping bag; and counts the number of articles put in the shopping bag by the user 2. In other words, according to a plurality of sets of image data, when the user holds an article as well as holds a shopping bag and when the held article is put in the held shopping bag, the unfair action detecting unit 113 counts that article in the shopping-bag insertion count. Meanwhile, the position of the shopping bag either can be specified by the administrator, or can be automatically specified using a different machine learning model. Moreover, when the position of the shopping bag is fixed, the unfair action detecting unit 113 can also count the number of inserted articles in the fixed shopping bag instead of the held shopping bag.

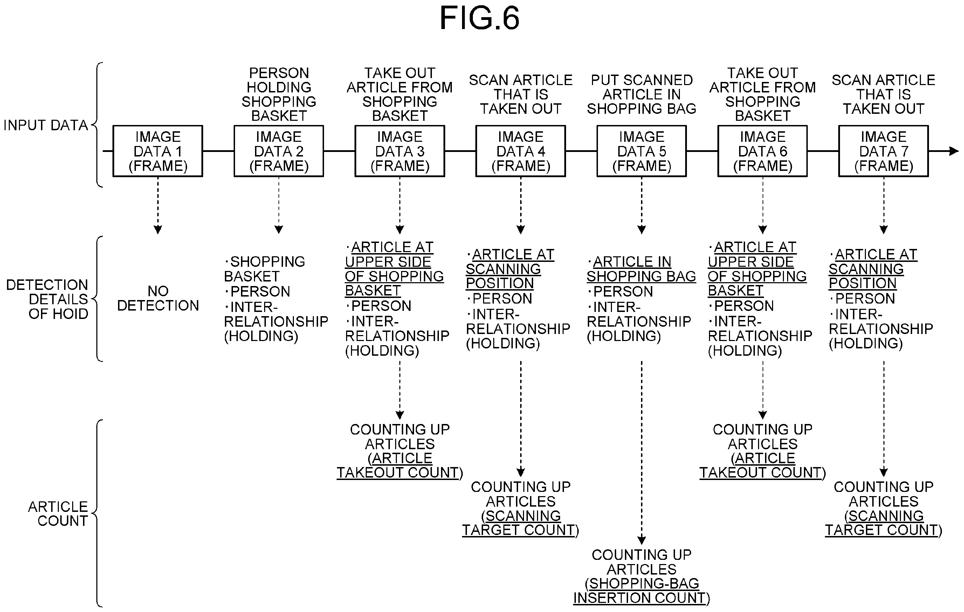

Herein, the explanation is given for a case in which the unfair action detecting unit 113 refers to the video data containing a plurality of sets of image data (frames) and counts the articles that the user 2 is purchasing. FIG. 6 is a diagram for explaining an example of counting up the purchased articles. In FIG. 6, the following information is illustrated: image data 1 to image data 7 representing the sets of input data in the HOID; the detection details of the HOID in response to the sequential input of the image data 1 to the image data 7; and the article count. Meanwhile, in FIG. 6, the explanation illustrated above the sets of image data represents the information captured in the image data, and is unknown information as far as the input to the HOID is concerned. On the other hand, that information is the target for detection using the HOID.

As illustrated in FIG. 6, the unfair action detecting unit 113 obtains the image data 1 in which no person or object is captured; inputs the image data 1 in the HOID; and obtains the output result. Accordingly, the unfair action detecting unit 113 determines that there is no detection result about a person or an object. Then, the unfair action detecting unit 113 obtains the image data 2 in which a person having a shopping basket is captured; inputs the image data 2 in the HOID; and obtains the output result. Accordingly, the unfair action detecting unit 113 detects the user 2 and the shopping basket held by the user 2.

Subsequently, the unfair action detecting unit 113 obtains the image data 3 in which a person is captured who is taking out an article from a shopping basket; inputs the image data 3 in the HOID; and obtains the output result. Accordingly, the unfair action detecting unit 113 detects the action that is taken by the user 2 and that indicates moving the held article to the upper side of the shopping basket. Herein, since the detection result corresponds to (a) illustrated in FIG. 5, the unfair action detecting unit 113 increments the article takeout count.

Then, the unfair action detecting unit 113 obtains the image data 4 in which a person is captured who is scanning an article; inputs the image data 4 in the HOID; and obtains the output result. Accordingly, the unfair action detecting unit 113 detects the action that is taken by the user 2 and that indicates moving the held article to the scanning position. Herein, since the detection result corresponds to (b) illustrated in FIG. 5, the unfair action detecting unit 113 increments the scanning target count.

Subsequently, the unfair action detecting unit 113 obtains the image data 5 in which a person is captured who is putting an article into a shopping bag; inputs the image data 5 in the HOID; and obtains the output result. Accordingly, the unfair action detecting unit 113 detects the action that is taken by the user 2 and that indicates putting the held article in the held shopping bag. Herein, since the detection result corresponds to (c) illustrated in FIG. 5, the unfair action detecting unit 113 increments the shopping-bag insertion count.

Then, the unfair action detecting unit 113 obtains the image data 6 in which a person is captured who is taking out an article from a shopping basket; inputs the image data 6 in the HOID; and obtains the output result. Accordingly, the unfair action detecting unit 113 detects the action that is taken by the user 2 and that indicates moving the held article to the upper side of the shopping basket. Herein, since the detection result corresponds to (a) illustrated in FIG. 5, the unfair action detecting unit 113 increments the article takeout count.

Subsequently, the unfair action detecting unit 113 obtains the image data 7 in which a person is captured who is scanning an article; inputs the image data 7 in the HOID; and obtains the output result. Accordingly, the unfair action detecting unit 113 detects the action taken by the user 2 for moving the held article to the scanning position. Herein, since the detection result corresponds to (b) illustrated in FIG. 5, the unfair action detecting unit 113 increments the scanning target count.

As explained above, the unfair action detecting unit 113 inputs, in the HOID, the frames of the video data obtained as a result of imaging performed from the time when the user 2 brings the shopping basket to the position of the self-service checkout machine 50 to the time when the user 2 pays the bill; obtains the output result (the detection result); and accordingly performs action identification (action recognition) of the target for count-up. As a result, the unfair action detecting unit 113 can count the number of articles that the user 2 intends to purchase. Meanwhile, as far as ending the counting of the articles is concerned, for example, the counting can be ended when the article registration count is notified from the self-service checkout machine 50 or when the completion of article registration is notified from the self-service checkout machine 50.

Then, the unfair action detecting unit 113 obtains, from the self-service checkout machine 50, the article registration count registered in the self-service checkout machine 50; compares the obtained article registration count with the counted number of articles; and detects any unfair action taken by the user 2.

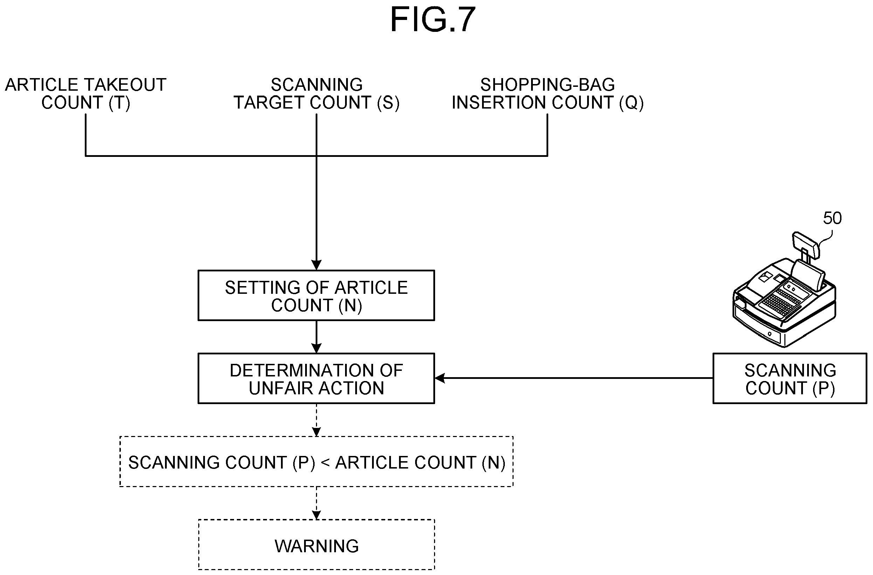

FIG. 7 is a diagram illustrating unfair action detection. As illustrated in FIG. 7, the unfair action detecting unit 113 counts the article takeout count (T), the scanning target count (S), and the shopping-bag insertion count (Q); and sets the highest count as the article count (N). Then, the unfair action detecting unit 113 compares the scanning count (the registered article count: P), which is registered in the self-service checkout machine 50, with the counted article count (N) and detects an unfair action if the article count (N) is greater than the scanning count (P).

Returning to the explanation with reference to FIG. 2, the warning unit 114 is a processing unit that outputs a predetermined warning if an unfair action is detected by the unfair action detecting unit 113. For example, the warning unit 114 displays a warning in the self-service checkout machine 50, or sends a notification indicating an unfair action by the user to a smartphone of a store employee present near the self-service checkout machine 50, or notifies the administrator terminal 60 about the information on the concerned self-service checkout machine 50 and about the detection of an unfair action. With reference to FIG. 7, when it is detected that the article count (N) is greater than the scanning count (P), the warning unit 114 outputs a warning.

### Flow of operations

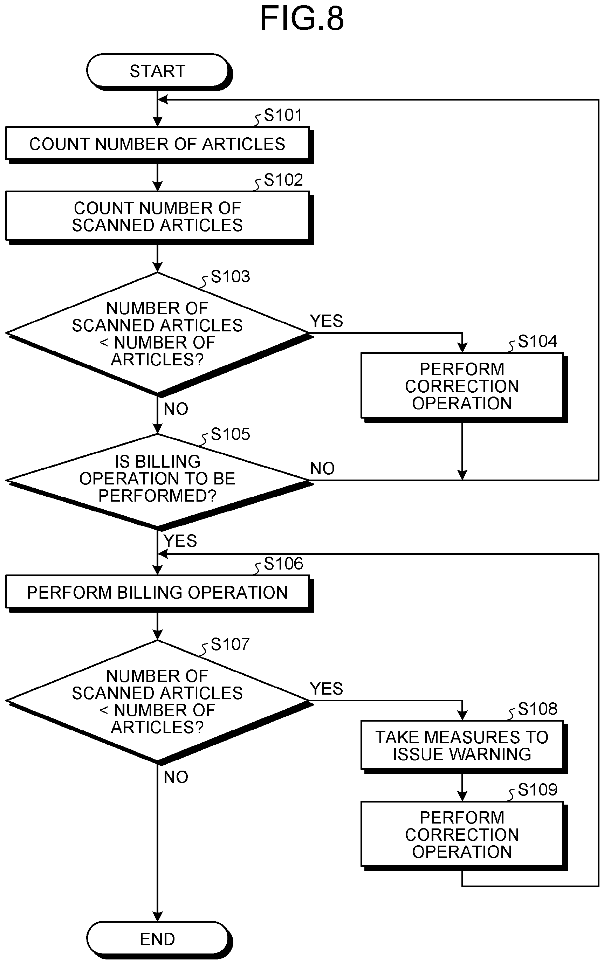

FIG. 8 is a flowchart for explaining the flow of a self-service checkout operation according to the first embodiment. As illustrated in FIG. 8, every time an article is held, the information processing apparatus 100 counts the number of articles (S101). Then, the self-service checkout machine 50 counts the number of scanned articles (S102). If the article count is greater than the scanning count (Yes at S103), then the information processing apparatus 100 requests for a correction operation (S104) and again performs the operations from S101 onward. Herein, the correction operation implies, for example, rescanning of the article by the user.

On the other hand, when the article count is not greater than the scanning count (No at S103) and when the self-service checkout machine 50 performs the scanning operation without the selection of the billing operation by an operation by the user 2 (No at S105), the operations from S101 are again performed.

On the other hand, when the billing operation is selected as a result of an operation performed by the user 2 (Yes at S105), the self-service checkout machine 50 performs the billing operation (S106). Then, the information processing apparatus 100 compares the article count, which is counted till the billing operation is performed, and the scanning count, which is registered in the self-service checkout machine 50 till the billing operation is performed (S107).

If the article count is greater than the scanning count (Yes at S107), then the information processing apparatus 100 detects an unfair action; takes measures to issue a warning (S108); and requests for a correction operation (S109). On the other hand, if the article count is not greater than the scanning count (No at S107), then the information processing apparatus 100 ends the operations.

### Operation for counting number of articles

Given below is the explanation of an operation for counting the number of articles. Herein, the explanation is given about an example in which the information processing apparatus 100 counts the number of articles taken out from the shopping basket and the number of articles put in the shopping bag.

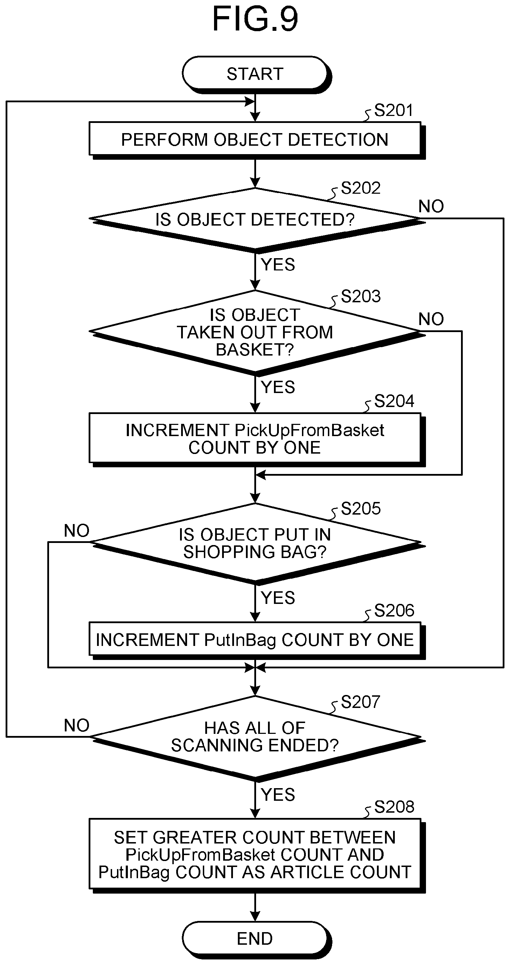

FIG. 9 is a flowchart for explaining the flow of an operation for counting the number of articles. As illustrated in FIG. 9, the information processing apparatus 100 uses the HOID and detects a person and an object from the image data (S201).

Once a person and an object are detected (Yes at S202), the information processing apparatus 100 determines whether or not the action indicates taking out an object from the shopping basket (S203). If the action indicates taking out an object from the shopping basket (Yes at S203), then the information processing apparatus 100 increments the PickUpFromBasket count (S204).

Then, the information processing apparatus determines whether or not the action indicates putting the object in the shopping bag (S205). If the action indicates putting the object in the shopping bag (Yes at S205), then the information processing apparatus 100 increments a PutInBag count (S206).

Subsequently, if the scanning is to be continued (No at S207), then the information processing apparatus 100 again performs the operations from S201 onward. When all of the scanning has ended (Yes at S207), the information processing apparatus 100 sets the greater count between the PickUpFromBasket count and the PutInBag count as the article count (S208).

Meanwhile, at S202, if no person or object is detected (No at S202), the information processing apparatus 100 performs the operation at S207 without performing the operations from S203 to S206. At S203, if the action of taking out an object from the shopping basket is not performed (No at S203), then the information processing apparatus 100 performs the operation at S205 without performing the operation at S204. Moreover, at S205, if the action of putting an article in the shopping bag is not performed (No at S205), then the information processing apparatus 100 performs the operation at S207 without performing the operation at S206.

### Effects

As explained above, as a result of using the HOID, the information processing apparatus 100 becomes able to detect an object such as an article or a shopping bag having interaction with the user (person). At that time, in order to count the number of articles that the user brings to the self-service checkout machine 50 with the intention of purchasing, the information processing apparatus 100 detects the shopping bag or the shopping basket that enables confirmation of bringing the articles or taking out the articles, and can accurately count the number of articles that the user intends to purchase. As a result, the information processing apparatus 100 becomes able to detect any unfair action taken at the self-service checkout machine 50. Meanwhile, an unfair action not only includes intentionally skipping the scanning of an article, but also includes forgetting to scan an article.

Meanwhile, in the commonly-used object identification, unless a large volume of learning data is available for each article, object identification is difficult; and the objects not having any interaction with a person also get identified. Thus, the objects in the background also get identified. In contrast, in the information processing apparatus 100, unlike in the case of commonly-used object identification, as a result of using the HOID that enables identification of only the objects having interaction with a person, an arbitrary object can be identified as "something" (without the influence of the external appearance of that object), and the corresponding object area (Bbox) can be estimated. Moreover, in the image data in the self-service checkout machine 50, the shopping bag or the shopping basket appears frequently without having much change in the appearance as compared to the articles. Hence, it becomes possible to reduce the cost for collecting the training data to be used in the training of the HOID.

### [b] Second Embodiment

In the first embodiment, the explanation is given about the action identification performed using the HOID. However, that is not the only possible case. Alternatively, instead of using the HOID, it is also possible to use a machine learning model in which a neural network is used, or to use a machine learning model that is generated based on deep learning.

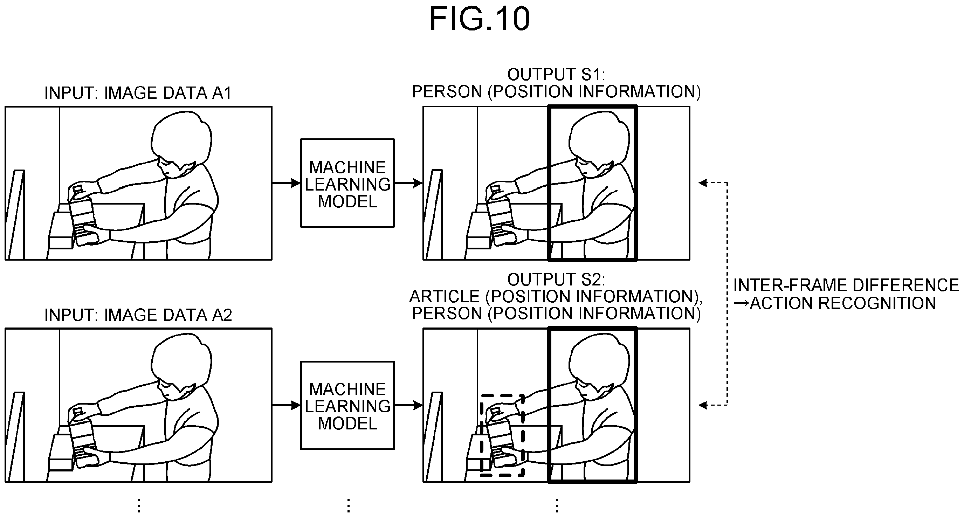

FIG. 10 is a diagram for explaining the action identification performed based on a machine learning model. The machine learning model illustrated in FIG. 10 is trained to detect the following information in response to the input of image data: the area information of objects such as a person, an article, a shopping basket, and a shopping bag captured in the image data.

The information processing apparatus 100 inputs image data A1 (a frame) in the machine learning model, and obtains an output result S1 in which the position information of a person is detected. Then, the information processing apparatus 100 inputs subsequently-obtained image data A2 in the machine learning model, and obtains an output result S2 in which the position information of a person and the position information of an article are detected.

Subsequently, the information processing apparatus 100 calculates the difference between the output result S1 and the output result S2, and performs action identification. For example, when a "person" is detected in both output results, if an "article" is detected as the difference therebetween, then the information processing apparatus 100 counts the article as the target article for purchase.

In this way, the information processing apparatus 100 can perform action identification based on the inter-frame difference, and count the number of articles. Meanwhile, the subsequent method for unfair action detection is identical to the first embodiment. Hence, the detailed explanation is not given again. As a result, the information processing apparatus 100 becomes able to provide a simple system in which a machine learning model is used.

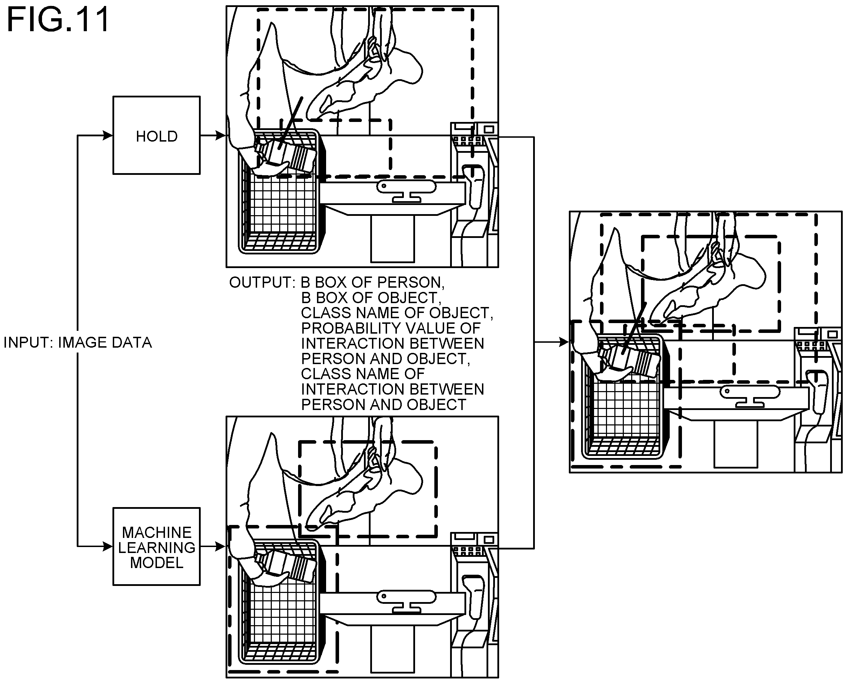

Moreover, the information processing apparatus 100 can perform action identification by combining the HOID and a machine learning model. FIG. 11 is a diagram for explaining the action identification performed by combining the HOID and a machine learning model. The machine learning model illustrated in FIG. 11 is trained to detect the following in response to the input of image data: the area information of a shopping basket or a shopping bag captured in the image data. That is, the machine learning model detects the area information (position information) of the objects that are not treated as the identification targets in the HOID, and detects the area information of the objects that slipped through the detection in the HOID.

As illustrated in FIG. 11, in an identical manner to the first embodiment, the information processing apparatus 100 detects the following from the image data: the Bbox of a person, the Bbox of an object, the probability value of the interaction between the person and the object, and the class name. On the other hand, the information processing apparatus 100 uses a machine learning model representing an example of a detection model, and detects the area information of a shopping basket or a shopping bag from the same image data.

Then, by combining the HOID and the machine learning model, the information processing apparatus 100 can identify the shopping basket or the shopping bag in the output result of the HOID, and can perform the operations identical to the first embodiment. As a result, the information processing apparatus 100 can accurately detect the position of the shopping basket or the shopping bag, thereby enabling achieving enhancement in the detection accuracy of the article and the interaction, as well as achieving enhancement in the accuracy of unfair action detection.

### [c] Third embodiment

Till now, the description was given about the embodiments of the present invention. However, besides the embodiments described above, the present invention can be implemented in various other forms.

### Numerical values

In the embodiments described above, the number of self-service checkout machines, the number of cameras, the numerical values, the training data, the number of sets of training data, the machine learning models, the class names, the number of classes, and the data formats are only exemplary; and can be changed in an arbitrary manner. Moreover, the flow of operations explained with reference to each flowchart can also be changed without causing any contradictions. Furthermore, regarding various models, it is possible to use models generated according to various algorithms of neural networks.

Moreover, regarding the scanning position and the position of the shopping basket, the information processing apparatus 100 can use a different machine learning model meant for detecting positions, or can use a known technology such as an object detection technology or a position detection technology. For example, based on the differences among the frames (image data) and the chronological variation in the frames, the information processing apparatus 100 can detect the position of the shopping basket. Thus, using that information, the information processing apparatus 100 can either perform detection or generate a different model. Furthermore, the information processing apparatus 100 can specify in advance the size of the shopping basket and, when an object of the specified size is detected from the image data, can identify that position as the position of the shopping basket. Meanwhile, since the scanning position is a fixed position to a certain extent, the information processing apparatus 100 can identify, as the scanning position, the position specified by the administrator.

### System

The processing procedure, the control procedure, the specific names, and the information including various kinds of data and parameters described in the above document and the drawings can be changed arbitrarily, unless otherwise specified.

Moreover, the specific forms of dispersion or integration of the constituent elements of the devices are not limited to the examples illustrated in the drawings. For example, the video obtaining unit 112 and the unfair action detecting unit 113 can be integrated. That is, the constituent elements, as a whole or in part, can be separated or integrated either functionally or physically based on various types of loads or use conditions. Furthermore, the process functions implemented in the device are entirely or partially implemented by a CPU or by computer programs that are analyzed and executed by a CPU, or are implemented as hardware by wired logic.

### Hardware

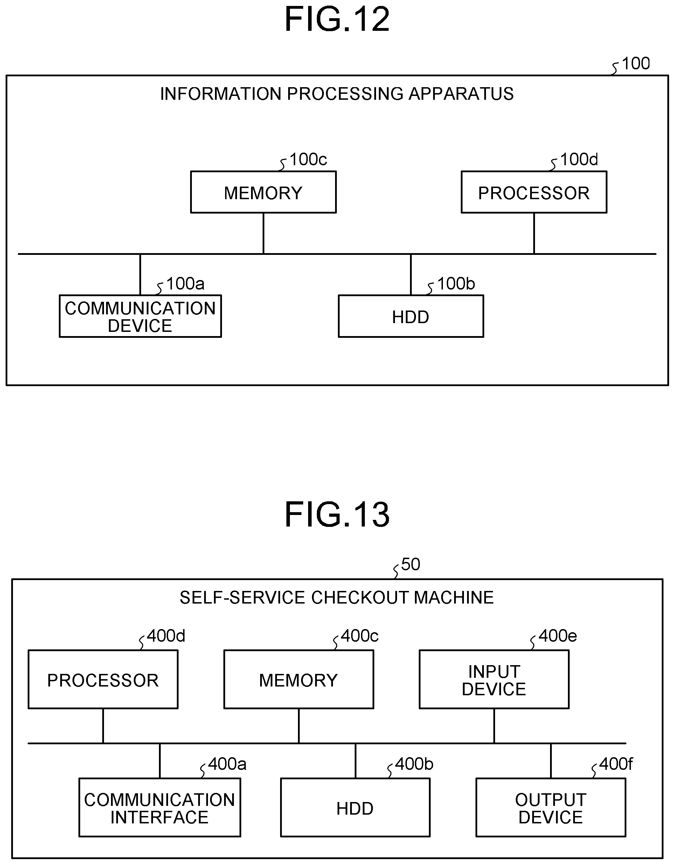

FIG. 12 is a diagram for explaining an exemplary hardware configuration. Herein, as an example, the explanation is given about the information processing apparatus 100. As illustrated in FIG. 12, the information processing apparatus 100 includes a communication device 100a, a hard disk drive (HDD) 100b, a memory 100c, and a processor 100d. Moreover, the constituent elements illustrated in FIG. 12 are connected to each other by a bus.

The communication device 100a is a network interface card that performs communication with other devices. The HDD 100b is used to store a computer program meant for implementing the functions illustrated in FIG. 2, and to store databases.

The processor 100d reads, from the HDD 100b, the computer program meant for implementing operations identical to the processing units illustrated in FIG. 2; loads the computer program in the memory 100c; and runs a process for implementing the functions illustrated in FIG. 2. For example, the process implements functions identical to the processing units of the information processing apparatus 100. More particularly, the processor 100d reads, from the HDD 100b, a computer program having the functions identical to the machine learning unit 111, the video obtaining unit 112, the unfair action detecting unit 113, and the warning unit 114. Then, the processor 100d runs a process that implements operations identical to the machine learning unit 111, the video obtaining unit 112, the unfair action detecting unit 113, and the warning unit 114.

In this way, as a result of reading and executing the computer program, the information processing apparatus 100 operates as an information processing apparatus that implements an information processing method. Alternatively, the information processing apparatus 100 can make a medium reading device read the computer program from a recording medium, and can execute the read computer program so as to implement functions identical to the embodiments described above. Meanwhile, the computer program is not limited to be executed by the information processing apparatus 100. Alternatively, for example, even when the computer program is executed by another computer, or by another server, or by a computer and a server in cooperation; the embodiments described above can be implemented in an identical manner.

The computer program can be distributed via a network such as the Internet. Alternatively, the computer program can be recorded in a computer-readable recording medium such as a flexible disk (FD), a compact disc read only memory (CD-ROM), a magneto-optical disk (MO), or a digital versatile disc (DVD). Then, a computer can read the computer program from the recording medium and execute it.

FIG. 13 is a diagram for explaining an exemplary hardware configuration of the self-service checkout machine 50. As illustrated in FIG. 13, the self-service checkout machine 50 includes a communication interface 400a, an HDD 400b, a memory 400c, a processor 400d, an input device 400e, and an output device 400f. Moreover, the constituent elements illustrated in FIG. 13 are connected to each other by a bus.

The communication interface 400a is a network interface card that performs communication with other information processing apparatuses. The HDD 400b is used to store computer programs meant for implementing the functions of the self-service checkout machine 50, and to store databases.

The processor 400d is a hardware circuit that reads, from the HDD 400b, a computer program meant for implementing the functions of the self-service checkout machine 50; loads the computer program in the memory 400c; and runs a process for implementing the functions of the self-service checkout machine 50. That is, the process implements functions identical to the processing units of the self-service checkout machine 50.

In this way, as a result of reading and executing the computer program, the self-service checkout machine 50 operates as an information processing apparatus that implements an operation control method. Alternatively, the self-service checkout machine 50 can make a medium reading device read the computer program from a recording medium, and can execute the read computer program so as to implement functions identical to the self-service checkout machine 50. Meanwhile, the computer program is not limited to be executed by the self-service checkout machine 50. Alternatively, for example, even when the computer program is executed by another computer, or by another server, or by a computer and a server in cooperation; the embodiments described above can be implemented in an identical manner.

The computer program meant for implementing the functions of the self-service checkout machine 50 can be distributed via a network such as the Internet. Alternatively, the computer program can be recorded in a computer-readable recording medium such as an FD, a CD-ROM, an MO, or an DVD. Then, a computer can read the computer program from the recording medium and execute it.

The input device 400e detects various input operations performed by the user, such as an input operation performed with respect to the computer program executed by the processor 400d. Examples of the input operation include a touch operation. In the case of enabling touch operations, the self-service checkout machine 50 further includes a display unit. Thus, the input operation detected by the input device 400e can be a touch operation performed on the display unit. The input device 400e can be, for example, buttons, a touch-sensitive panel, and a proximity sensor. Moreover, the input device 400e reads barcodes. For example, the input device 400e is a barcode reader. The barcode reader includes a light source and an optical sensor, and scans barcodes.

The output device 400f outputs data, which is output from the computer program executed by the processor 400d, via an external device connected to the self-service checkout machine 50, such as an external display device. Meanwhile, when a display unit is included therein, the self-service checkout machine 50 need not include the output device 400f.

According to an aspect of the present invention, it becomes possible to detect an unfair action taken at a self-service checkout machine.

## Claims

1. An information processing program that causes a computer (100) to execute a process comprising:
obtaining (112) image data in which a predetermined area in front of an accounting machine, which is used by a user to register an article and pay bill, is captured;
obtaining (113) output result by inputting the image data in a machine learning model (104) that is trained to identify an article and a storage for an article; and
identifying (113), by referring to the article and the storage specified in the output result, action taken by the user with respect to an article.

2. The information processing program according to claim 1, wherein
the process further comprises
generating (113), by inputting the image data into machine learning model, a first area information in which a first class indicating a user who purchased a product and an area where the user appears are associated, a second area information in which a second class indicating an object including the product and an area where object appears are associated, and an interaction between the first class and the second class, and
identifying (113) an action of the user to the article and the storage based on the first area information, the second area information, and interaction.

3. The information processing program according to claim 1, wherein
the process further comprises determining (113) a first-type area within which the accounting machine is made to read barcode of an article held by the user, wherein
the identifying (113) includes
referring to the article and the storage specified in the output result, and
identifying action of holding an article as taken by the user within the first-type area.

4. The information processing program according to claim 3, wherein
the identifying (113) includes
identifying a second-type area in which a shopping basket is placed and which is adjacent to the accounting machine,
determining a storage count indicating number of times for which an article in the second-type area is moved into the storage, and
detecting unfair action by the user when the storage count is greater than registered count indicating number of articles registered from the accounting machine.

5. The information processing program according to claim 4, wherein the process further comprises displaying (114), in response to detection of unfair action by the user, a warning in the accounting machine or notifying (114) store employee present near the accounting machine about unfair action by the user.

6. The information processing program according to claim 1, wherein
the machine learning model (104) is a model meant for human object interaction detection (HOID) in which machine learning is performed in order to identify
first-type class indicating the user who purchases an article and first-type area information indicating area in which the user appears,
second-type class indicating an object including the article and second-type area information indicating area in which the object appears, and
interaction between the first-type class and the second-type class,
the obtaining (113) includes
inputting the image data in the machine learning model, and
obtaining the output result, and
the identifying (113) includes identifying, based on the output result, action of holding the article as taken by the user.

7. The information processing program according to claim 6, wherein
the machine learning model (104) includes
a machine learning model meant for the HOID, and
a detection model in which machine learning is performed so as to detect area information of objects that are included in image data and that include an object not treated as identification target in the machine learning model meant for the HOID,
the obtaining (113) includes
inputting the image data in the machine learning model meant for the HOID, and obtaining identification result of classes and interactions, and
inputting the image data in the detection model, and obtaining detection result including area information of objects, and
the identifying (113) includes
identifying, based on area information of the objects included in the detection result, position of a shopping basket in which a pre-purchase article is put and position of a shopping bag in which a post-purchase article is put, and
either when the first-type class and the second-type class having the interaction are detected at position of the shopping basket or when the first-type class and the second-type class having the interaction are detected at position of the shopping bag, counting number of articles belonging to the second-type class as number of articles to be purchased.

8. An information processing method causing a computer (100) to execute a process comprising:
obtaining (112) image data in which a predetermined area in front of an accounting machine, which is used by a user to register an article and pay bill, is captured, using a processor;
obtaining (113) output result by inputting the image data in a machine learning model (104) that is trained to identify an article and a storage for an article, using the processor; and
identifying (113), by referring to the article and the storage specified in the output result, action taken by the user with respect to an article, using the processor.

9. An information processing apparatus (100) comprising:
an obtain unit (112) that obtains image data in which a predetermined area in front of an accounting machine, which is used by a user to register an article and pay bill, is captured;
an input unit (113) that inputs the image data in a machine learning model (104) that is trained to identify an article and a storage for an article and obtains output result; and
an identify unit (113) that refers to the article and the storage specified in the output result and identifies action taken by the user with respect to an article.

10. The information processing device (100) according to claim 9, wherein
the input unit (113) generates, by inputting the image data into machine learning model, a first area information in which a first class indicating a user who purchased a product and an area where the user appears are associated, a second area information in which a second class indicating an object including the product and an area where object appears are associated, and an interaction between the first class and the second class, and
the identify unit (113) identifies an action of the user to the article and the storage based on the first area information, the second area information, and interaction.

11. The information processing device (100) according to claim 9, further comprising:
a determine unit (113) that determines a first-type area within which the accounting machine is made to read barcode of an article held by the user, wherein,
the identify unit (113) refers to the article and the storage specified in the output result and identifies action of holding an article as taken by the user within the first-type area.

12. The information processing device (100) according to claim 11, wherein
the determine unit (113) identifies a second-type area in which a shopping basket is placed and which is adjacent to the accounting machine;
the identify unit (113) determines a storage count indicating number of times for which an article in the second-type area is moved into the storage, and detects unfair action by the user when the storage count is greater than registered count indicating number of articles registered from the accounting machine.

13. The information processing device according (100) to claim 12, further comprising a warning unit (114) that displays, in response to detection of unfair action by the user, a warning in the accounting machine or notifies store employee present near the accounting machine about unfair action by the user.

14. The information processing device (100) according to claim 9, wherein the machine learning model (104) is a model meant for human object interaction detection (HOID) in which machine learning is performed in order to identify
first-type class indicating the user who purchases an article and first-type area information indicating area in which the user appears,
second-type class indicating an object including the article and second-type area information indicating area in which the object appears, and
interaction between the first-type class and the second-type class,
the input unit (113) inputs the image data in the machine learning model and obtains the output result, and
the identifying unit (113) identifies, based on the output result, action of holding the article as taken by the user.

15. The information processing device (100) according to claim 14, wherein the machine learning model (104) includes
a machine learning model meant for the HOID, and
a detection model in which machine learning is performed so as to detect area information of objects that are included in image data and that include an object not treated as identification target in the machine learning model meant for the HOID,
the input unit (113), by inputting the image data in the machine learning model meant for the HOID, obtains identification result of classes and interactions and, inputting the image data in the detection model, obtains detection result including area information of objects, and
the identify unit (113) identifies, based on area information of the objects included in the detection result, position of a shopping basket in which a pre-purchase article is put and position of a shopping bag in which a post-purchase article is put, and either when the first-type class and the second-type class having the interaction are detected at position of the shopping basket or when the first-type class and the second-type class having the interaction are detected at position of the shopping bag, counts number of articles belonging to the second-type class as number of articles to be purchased.
